# EUROPEAN PATENT APPLICATION

(11) **EP 4 480 634 A1**
(43) Date of publication of application: **25.12.2024**
(21) Application number: 24182547.0
(22) Date of filing: 17.06.2024
(51) Int. Cl.: B23Q 39/04

(54) **TRANSFER MACHINE AND SWARF EVACUATION METHOD**

(30) Priority: 19.06.2023 IT 202300012543
(71) Applicant: Riello Sistemi Digital Transfer S.r.l., 20121 Milano (IT)
(72) Inventor: GIARETTA, Francesco, 20121 MILANO (IT); CABIANCA, Pietro, 20121 MILANO (IT)
(74) Representative: Lissandrini, Marco

(57) **Abstract**

A transfer machine (10) comprises a support structure (20) comprising a turntable (30) configured to rotate about an axis (Z) of a first triplet (X, Y, Z) of Cartesian axes; a plurality of locking means (40) arranged on said turntable (30), each of said locking means (40) being configured to hold in position a workpiece (100) oriented in accordance with a second triplet (X', Y', Z') of Cartesian machining axes; a plurality of machining stations (50) organised on said support structure (20) and each comprising at least one operating unit (60) provided with a tool for removing material and configured to be moved reciprocally compared to a workpiece (100) along a machining axis oriented in accordance with said second triplet (X', Y', Z') of Cartesian axes, wherein said second triplet (X', Y', Z') of Cartesian axes is rotated by an angle (θ) of rotation relative to said first triplet (X, Y, Z) of Cartesian axes.

## Description

### Technical field

The present invention falls within the field of machine tools, in particular for the removal of swarf, intended to perform multiple mechanical machining operations on pieces, such as pieces intended for the automotive and/or thermo-hydraulic, hydraulic, pneumatic, electronic and still other sectors.

In more detail, the present invention relates to a transfer machine, i.e., a machine with automatic transfer of a piece, in particular with a turntable, which combines multiple mechanical machining operations (e.g., drilling, milling, turning, boring, grinding and others) in a single machine.

### Prior art

In the technical field of reference, transfer machines are known for carrying out multiple mechanical machining operations, in particular with swarf removal, on a blank workpiece.

Generally, the known transfer machines comprise a support structure (i.e., a frame or casing) defining an internal working volume, and a multiplicity of work stations arranged in succession on the support structure. Each work station is provided with a multiplicity of operating units, each of which comprises one or more swarf removal tools.

The support structure has an inlet, through which a blank workpiece enters inside the working volume of the transfer machine, and an outlet arranged downstream of the inlet, through which the workpiece is unloaded.

The support structure further comprises bottom walls extending substantially parallel to the ground (i.e., horizontally) and configured to receive the swarf produced during machining.

The known transfer machines also comprise a turntable, equipped with locking systems and configured to sequentially transfer the blank workpiece, in particular by means of regular rotary steps of the table, at the work stations. Thereby, each rotary step of the table corresponds to the loading of a blank piece in input to the machine and the simultaneous unloading of a machined piece (i.e., finished or semi-finished) in output from the machine.

That is, each rotary step of the aforesaid turntable corresponds to a production step actuated at each work station; in particular, a production step can comprise one or more mechanical machining operations performed by means of the aforesaid operating units. Therefore, the number of operating units on a transfer machine will depend on the number of machining operations required to transform the blank piece into a finished or semi-finished piece.

The transfer machines of known type produce a large amount of swarf, as they perform multiple machining operations simultaneously. Such swarf is deposited inside the support structure of the transfer machine and, in particular, accumulates over time forming bulky masses or heaps.

Such masses or heaps of swarf reach considerable size and bulk over time, and this creates a decrease (i.e., an obstruction) in the machine's working volume. For example, this frequently occurs when machining metallic materials which produce elongated, filamentous swarf (i.e., which tends to tangle rather than break into small sections), such as low-carbon steels (i.e., soft and extra-soft steels) and brass alloys, particularly lead-free.

In addition, such machines require a considerable amount of lubricating cooling fluid, typically delivered by special nozzles. In fact, in addition to cooling and reducing friction at the contact zone between tool and workpiece, such lubricating and cooling fluid is used to evacuate/discharge metal swarf, exploiting the kinetic energy of the fluid itself.

In the case of dry machining, the lack of lubricating cooling fluid makes the evacuation of swarf from the lower plates of the base particularly difficult. Therefore, the transfer machines of known type such as those briefly described above have in practice proved to include drawbacks.

The main drawback lies in the fact that the transfer machines of known type require frequent removal of the accumulated swarf, which results in frequent production stops/interruptions. In more detail, the transfer machines of known type do not allow an effective unloading (i.e., evacuation) of the metal swarf mass produced during the multiple machining steps. In particular, the metal swarf mass accumulates over time and settles inside the structure of the transfer machine and, in particular, increases in proportion to the number of operating hours of the transfer machine itself and the number of machining operations required by a workpiece. Such an accumulation of metal swarf mass obstructs, at least partially, the working volume of the machine, forcing production stops and interruptions. This results in a lowering of the overall production output (i.e., number of parts produced in the unit of time) of the aforesaid transfer machine.

A further drawback is that, due to the accumulation of swarf which hinders the correct movement of operating components, the transfer machines of known type risk introducing both dimensional and geometric errors, as well as surface defects on the pieces produced. In addition, in the most severe cases, such an accumulation of metal swarf mass results in the breakage of the workpiece or the transfer machine tool, or both.

A further drawback is that the transfer machines of known type require a large amount of lubricating cooling fluid, which must subsequently be collected and disposed of, resulting in high costs. Disadvantageously, the use of a lubricating cooling fluid also prevents the immediate recycling of material, as the swarf mass must be dried and cleaned before it can be reused in other production processes.

### Objects of the invention

The technical task of the present invention is to propose a transfer machine which allows to overcome, at least in part, the above-mentioned drawbacks of the prior art.

In particular, an object of the present invention is to provide a transfer machine which an allows effective and rapid evacuation and exit of the swarf mass, especially under severe machining conditions, such as the machining of metallic materials which produce long swarf which tends to tangle (e.g., low-carbon steel, stainless steels, brass alloys and still others) and machining operations in the absence of lubricating cooling fluid.

That is, the object of the present invention is to provide a transfer machine which is capable of discharging/expelling (from the inside to the outside of the machine) large masses of metal swarf produced during the machining of a piece in an appropriate manner.

A further object of the present invention is to provide a transfer machine which allows the use of lubricating cooling fluid for swarf evacuation purposes to be minimised.

A further object of the present invention is to provide a transfer machine which is constructively simple and compact.

The stated technical task and the specified objects are substantially achieved by a transfer machine and by a machining swarf evacuation method comprising the technical features set forth in the independent claims.

The dependent claims introduce further advantageous aspects of the invention.

### Brief description of the drawings

The present invention is hereinafter further described in some of the preferred embodiments thereof, given for purely exemplary and non-limiting purposes with reference to the accompanying drawings, in which:
- figure 1 illustrates, according to a perspective view, a transfer machine in accordance with a possible embodiment of the invention;
- figure 2 illustrates, according to a perspective view, the transfer machine shown in figure 1 with some parts removed to better highlight others thereof;
- figure 3 illustrates, according to a longitudinal sectional view, the transfer machine shown in figure 1;

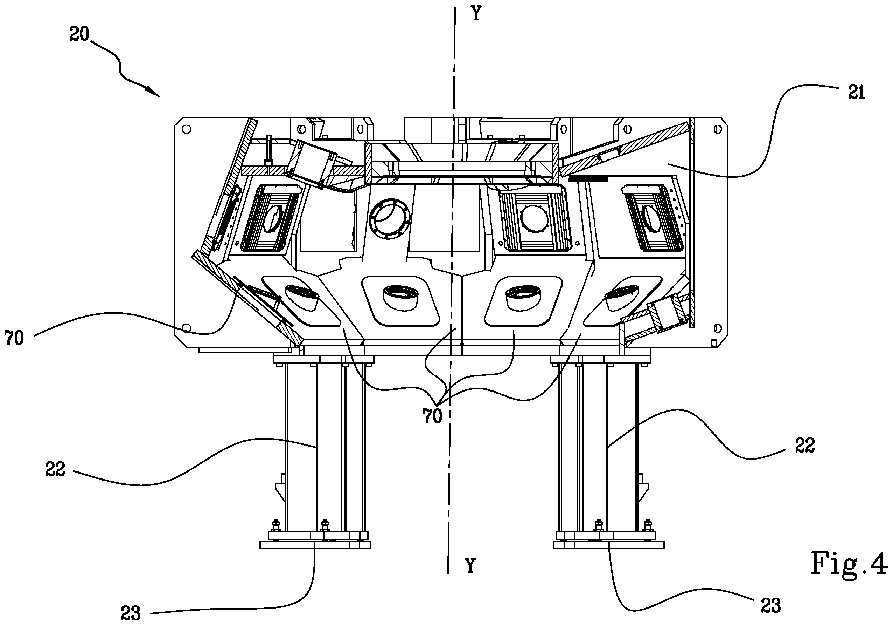

- figure 4 illustrates, according to a longitudinal sectional view, the transfer machine shown in figure 2;

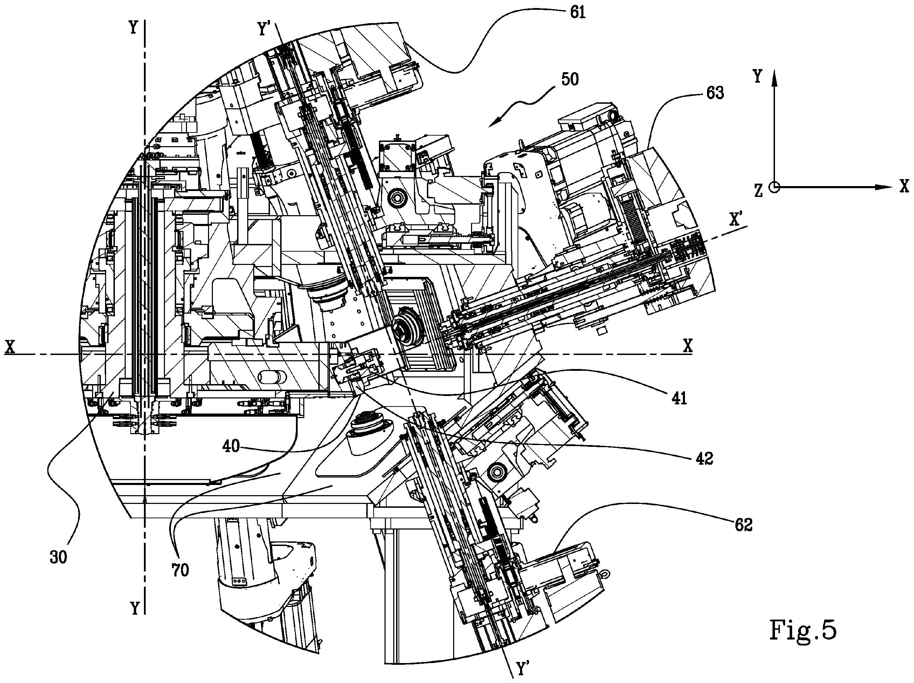

- figure 5 illustrates, according to a longitudinal sectional view, an enlarged detail of the transfer machine shown in figure 4.
- figure 6 illustrates, according to a perspective view, a detail of the transfer machine shown in figure 2.

With reference to the drawings, they serve solely to illustrate embodiments of the invention with the aim of better clarifying, in combination with the description, the inventive principles on which the invention is based.

### Detailed description of the invention

With reference to the attached figures, a transfer machine according to the present invention has been denoted overall with the number 10.

The machine 10 can advantageously be used in the production and marketing of automatic piece transfer machines for carrying out multiple mechanical machining operations (e.g., drilling, milling, turning, boring, grinding and others) on a blank workpiece.

In the following, reference will be made, in a non-limiting manner, to a transfer machine provided with a multiplicity of work stations without going beyond the scope of the present description.

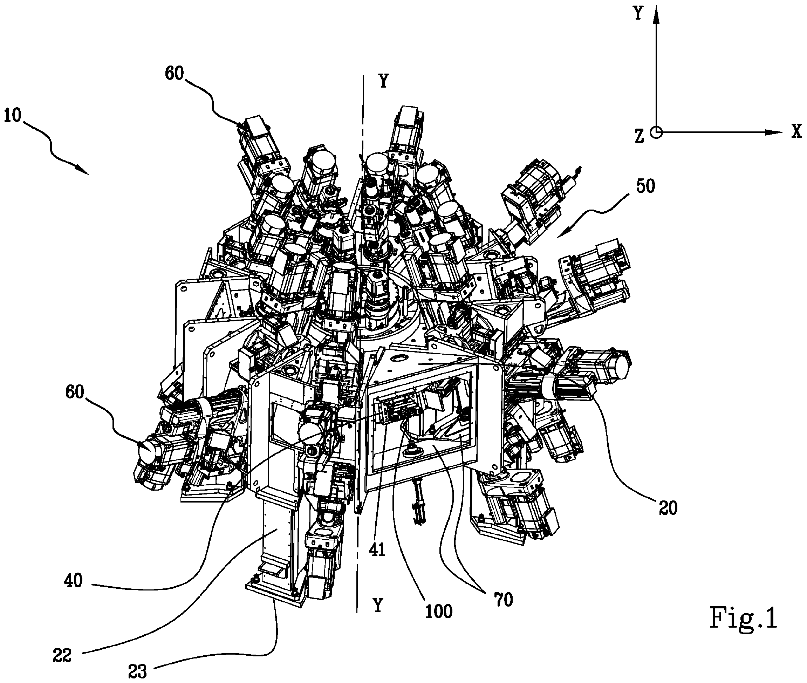

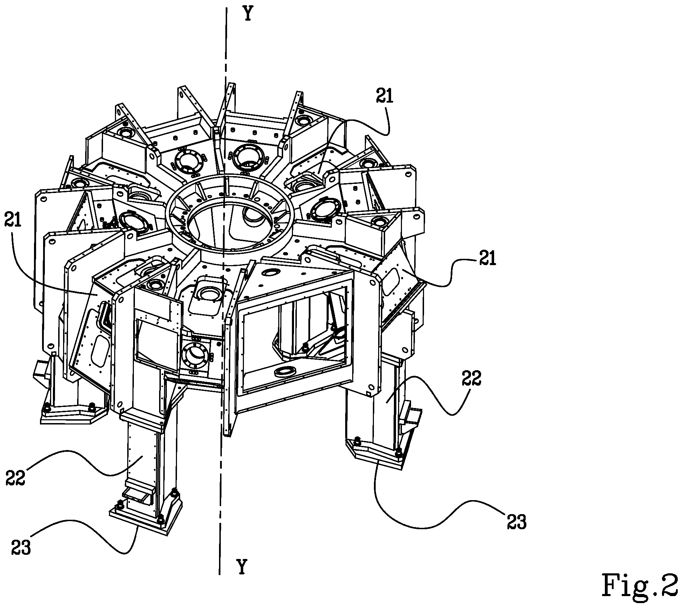

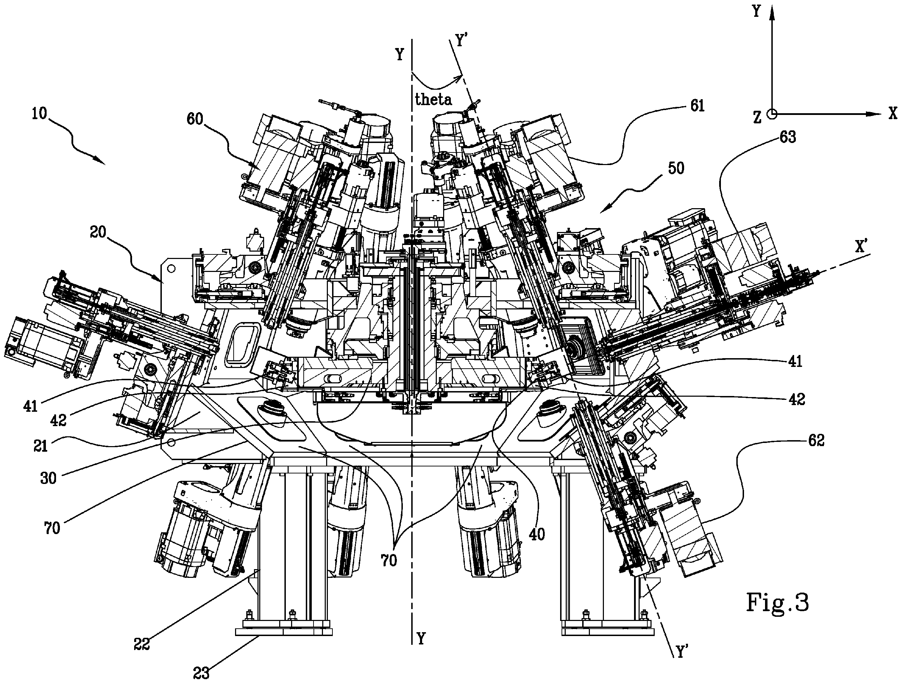

With particular reference to figures 1 and 2, the transfer machine 10 comprises a support structure 20 which is substantially circular in shape, and extending around a first axis called "Y", preferably vertical and substantially orthogonal to the ground. In more detail, the axis Y belongs to a first triplet of Cartesian axes X, Y, Z integral with the machine, also called the "machine triplet", as will be better described below (figure 3).

Preferably, the support structure 20 comprises a plurality of seats, each configured to allow a mechanical coupling with a corresponding plurality of machining stations 50 (figure 3) introduced and described in more detail below.

According to an aspect of the invention, the support structure 20 comprises a containment body 21 extending substantially annularly around the axis Y, and configured so as to define an internal housing volume.

According to the illustrated example, the support structure 20 comprises a plurality of legs 22 extending from the containment body 21 along a direction substantially parallel to the axis Y and configured to allow the containment body 21 itself to be arranged in accordance with an elevated position relative to the ground. Furthermore, a plurality of supporting feet 23 is respectively connected to the plurality of legs 22 and configured to rest on the ground.

With particular reference to figure 3, the support structure 20 comprises a turntable 30 configured to rotate around the axis Y. In the example illustrated, a second axis called "X" defines, together with the axis Y, a plane which longitudinally cuts the transfer machine 10 and which passes through the centreline of the machine itself and a machining station (figure 3). Furthermore, a third axis called "Z" is perpendicular to the plane defined by X, Y. In the example illustrated, the axis Z exits from the drawing plane.

More specifically, the turntable 30 is configured to be housed inside the aforesaid internal housing volume defined by the containment body 21. Operationally, the rotation around the axis Y of the turntable 30 is such as to ensure the transfer of each workpiece 100 from one machining station 50 to the next machining station. In more detail, the blank piece to be machined will be inserted in a first station, while the finished piece will be extracted and unloaded from a last machining station (or from the first station).

According to an aspect of the invention, the containment body 21, the plurality of legs 22 and the plurality of feet 23 are made of steel or the like, to impart strength and rigidity to the transfer machine 10 during its operation. With particular reference to figure 3, the turntable 30 comprises a plurality of locking means 40, each of which is configured to hold in position a workpiece 100 oriented in accordance with a second triplet of Cartesian machining axes called X', Y', Z'. In particular, in the course of the present description, such a second triplet of axes will be referred to as also with the expression "machining triplet".

More specifically, each locking means 40 comprises a vice 41 for clamping a workpiece 100 and a wedge-shaped body 42 interposed and fixed between the vice 41 and a portion of the turntable 30.

In particular, the wedge-shaped body 42 defines an inclined surface thereof, in particular by an angle substantially equal to the angle θ, at which the vice 41 is mechanically mounted. Thereby, a workpiece 100 is oriented inclined in accordance with the second triplet (X', Y', Z') of Cartesian axes rotated relative to the first triplet (X, Y, Z) of Cartesian axes.

That is, with reference to the embodiment illustrated in the attached figures, the wedge-shaped body 42 allows the turntable 30 and the vice 41 to be interfaced with each other so as to arrange, in use, a workpiece 100 oriented with the inclination angle of the vice 41 itself, compared to a horizontal plane, i.e., parallel to the ground.

Advantageously, the interposition of the wedge-shaped body 42 between the turntable 30 and the vice 41 also allows the use of components (in particular turntable and vice) already commercially available.

According to an aspect of the invention, the transfer machine 10 comprises a plurality of machining stations 50 organised on the support structure 20 and each comprising at least one operating unit 60 provided with a tool for removing material. Furthermore, the operating unit 60 is configured to be moved reciprocally compared to the workpiece 100 along a machining axis oriented in accordance with the second triplet of Cartesian axes X', Y', Z'. In the example illustrated in figure 3, there are three operating units 61, 62, 63, two of which are arranged along a first axis called Y' and one of which is arranged along a second axis called X'. In more detail, two operating units 61, 62 are arranged opposite each other, preferably facing each other, and can be moved along the axis Y'. A third operating unit 63 is configured to be moved relative to the workpiece 100 along the axis X' perpendicular to the axis Y' of movement of the first 61 and second 62 operating units 60.

With particular reference to figures 1 and 2, the machining stations 50 are angularly spaced from each other in a plane defined by the other two axes (X, Z) of the first triplet (X, Y, Z) of Cartesian axes. That is, the transfer machine 10, in accordance with a plan view from above, is basically carousel-shaped.

Preferably, the number of locking means 40 on the turntable 30 is equal to the number of machining stations 50.

Operationally, a workpiece 100 is mounted on each of the locking means 40 and, by rotating the turntable 30 about the rotation axis Y, the workpiece 100 is brought at a work area of an operating unit 60, which carries a tool configured to perform a swarf removal machining.

On each machining station 50, a swarf removal machining corresponding to a step of the machining cycle of the workpiece 100 itself is performed on the workpiece 100.

Advantageously, this allows a simultaneous and synchronous machining by all tools present in the respective machining stations. Therefore, the production cycle time depends on the time required to perform the longest machining.

In accordance with the embodiment illustrated in the attached figures, and with particular reference to figure 3, the "machining triplet" defined by the Cartesian axes X', Y', Z' is rotated by a rotation angle "θ" relative to the "machine triplet" defined by the Cartesian axes X, Y, Z. In particular, the rotation angle θ is other than 0° and 90°. Even more in particular, the rotation angle θ is comprised between 20° and 50°, preferably between 30° and 45°. Preferably, the axes X', Y' define a plane which longitudinally cuts the transfer machine 10 and which passes through the centreline of the machine itself and a machining station (figure 3). Such a plane is substantially parallel to the plane defined by the axes X, Y, while the axis Z' exits from the plane defined by X', Y'.

In the example illustrated, the rotation of the machining triplet (X', Y', Z') of Cartesian axes relative to the machine triplet (X, Y, Z) of Cartesian occurs on the plane X, Y, while the axis Z remains essentially parallel to the axis Z'. In other words, the axes of the machining triplet are rotated so that the workpiece is oriented non-parallel to the Cartesian axes of the machine triplet and, in particular, is inclined compared to the axis Y about which the turntable 30 rotates. As illustrated in figure 3, the angle θ is defined between the axis Y of the machine triplet and the axis Y' of the machining triplet.

Still in other terms, the rotation angle θ is defined starting from a configuration in which the first (X, Y, Z) and the second (X', Y', Z') triplets of Cartesian axes share a same base plane in which two of their respective axes called X and Z lie and in which the further axis called Y of each triplet is orthogonal to the plane, and subsequently by rotating the second triplet (X', Y', Z') about one of the axes X or Z so that the axis Y' of the second triplet (X', Y', Z') intersects the axis Y of the first triplet (X, Y, Z), forming an angle other than 0° or 90°, i.e., they are disposed in a non-parallel and non-orthogonal manner.

According to an aspect of the invention, the inclined orientation of the workpiece is achieved by means of the wedge-shaped body 42 having a first inclined face in contact with the vice 41 and a second inclined face in contact with a portion of the turntable 30. Thereby, the vice 41 is oriented in accordance with the machining triplet defined by the Cartesian axes X', Y', Z' and assumes an inclined configuration relative to the machine triplet defined by the axes X, Y, Z.

It is therefore evident that the transfer machine 10 has a non-orthogonal architecture/conformation, in which on each machining station 50 the workpiece 100 is oriented non-parallel, i.e., inclined, relative to the first triplet (X, Y, Z) of Cartesian axes representing the reference axes of the machine. In particular, the aforesaid workpiece 100 is oriented inclined relative to the axis Y, i.e., the vertical rotation axis of the turntable 30.

Similarly, each machining station 50 is arranged inclined in a concordant manner with the inclination of the workpiece 100, in particular by means of a rotation of the axis Y, i.e., on the vertical plane (X, Y). As a result, the transfer machine 10 and in particular the operating units 60 are oriented with an elevated and greater inclination, relative to the transfer machines commonly found on the market. Advantageously, such a circumstance allows a bottom wall 70 of each machining station 50, i.e., the wall on which machining swarf which has fallen by gravity accumulates, to be built at a steep angle to the ground. In particular, the bottom wall 70 is inclined towards the ground by an angle of at least 20° relative to a horizontal direction to favour the evacuation of swarf. Preferably, the bottom wall 70 is inclined by an angle at least equal to 30°, in particular preferably greater than 30°, e.g., comprised in the range from 30° to 40°.

Advantageously, the machining swarf is thus discharged from the machine efficiently, avoiding accumulation inside the containment body 21.

In addition, such an orientation of the transfer machine 10 allows to make a discharge mouth, i.e., an opening through which the swarf is discharged, having an increased dimensional extension relative to the known traditional solutions.

Advantageously, the discharge of the machining swarf is further improved. According to an aspect of the invention, the bottom wall 70 is mechanically connected integrally with the support structure 20, in particular the containment body 21.

Preferably, the bottom wall 70 is mechanically connected to the containment body 21 in a fixed manner, i.e., by non-removable connection means, for example by a welding process.

That is, the bottom wall 70 is an integral part of the containment body 21 and thus of the support structure 20.

In particular, as illustrated in the attached figure 3, the containment body 21 is shaped so that a longitudinal section thereof in the plane X, Y is substantially "C"-shaped. Specifically, the lower portion of such a "C" profile is defined by the bottom wall 70.

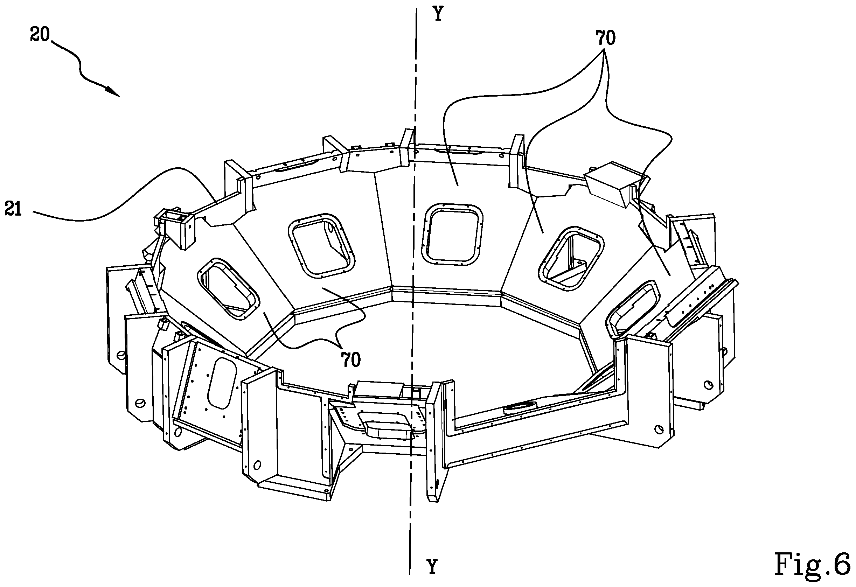

With particular reference to figure 6, the bottom walls 70 define a conformation of the lower portion of the containment body 21 which is substantially crown-shaped. In addition, since the bottom walls 70 are inclined, the lower portion of the containment body 21 assumes a substantially funnel-like shape which allows machining swarf to be discharged and conveyed outside the machine simply and quickly.

Advantageously compared to the prior art, the transfer machine according to the invention allows swarf evacuation even without the use of lubricating cooling fluid and is therefore especially adapted to carry out "dry" machining operations. Furthermore, in the case of machining operations using lubricating cooling fluid, the machine according to the invention allows to reduce the consumption thereof, as it is capable of facilitating the evacuation of swarf thanks to the slope of the bottom walls.

A further object of the present invention is also a method for evacuating machining swarf from a transfer machine 10 of the type described above, and of which the same numerical references will be maintained.

The method comprises the step of arranging a transfer machine 10 provided with:
- a support structure 20 comprising a turntable 30 configured to rotate about an axis Y of a first triplet (X, Y, Z) of Cartesian axes;
- a plurality of locking means 40 arranged on the turntable 30, each of the locking means 40 is configured to hold in position a workpiece 100 oriented in accordance with a second triplet (X', Y', Z') of Cartesian machining axes;
- a plurality of machining stations 50 organised on the support structure 20 and each comprising at least one operating unit 60 provided with a tool for removing material and configured to be moved reciprocally compared to a workpiece 100 along a machining axis oriented in accordance with the second triplet (X', Y', Z') of Cartesian axes,

The method in question comprises the steps of:
- rotating the second triplet (X', Y', Z') of Cartesian axes by a rotation angle θ relative to the first triplet (X, Y, Z) of Cartesian axes;
- providing a bottom wall 70 in each machining station 60 to collect machining swarf which has fallen due to gravity; and
- installing the bottom wall 70 in a configuration inclined towards the ground by an angle of at least 20° relative to a horizontal direction to favour the evacuation of swarf.

Preferably, the rotation angle θ is other than 0° and 90°, preferably comprised between 30° and 45°.

In accordance with the method, said rotation angle θ is defined starting from a configuration in which the first (X, Y, Z) and the second (X', Y', Z') triplets of Cartesian axes share a same base plane in which two of their respective axes called "X" and "Z" lie and in which the further axis called "Y" of each triplet is orthogonal to said plane, and subsequently by rotating the second triplet (X', Y', Z') about one of the axes "X" or "Z" so that the axis "Y" of the second triplet (X', Y', Z') intersects the axis "Y" of the first triplet (X, Y, Z), forming an angle other than 0° or 90°, i.e., said axes Y of the respective triplets are disposed in a non-parallel and non-orthogonal manner, preferably in which said axis "Y" of the first triplet (X, Y, Z) is substantially orthogonal to the ground.

## Claims

1. A transfer machine (10), comprising:
- a support structure (20) comprising a turntable (30) configured to rotate about an axis (Y) of a first triplet of Cartesian axes (X, Y, Z);
- a plurality of locking means (40) arranged on said turntable (30), each of said locking means (40) being configured to hold in position a workpiece (100) oriented in accordance with a second triplet of Cartesian machining axes (X', Y', Z');
- a plurality of machining stations (50) organised on said support structure (20) and each comprising at least one operating unit (60) provided with a tool for removing material and configured to be moved reciprocally compared to a workpiece (100) along a machining axis oriented in accordance with said second triplet (X', Y', Z') of Cartesian axes,
**characterised in that** said second triplet (X', Y', Z') of Cartesian axes is rotated by an angle (Θ) relative to said first triplet (X, Y, Z) of Cartesian axes.

2. The transfer machine according to claim 1, wherein said rotation angle (Θ) is other than 0° or 90°.

3. The transfer machine (10) according to claim 1 or 2, wherein said rotation angle (Θ) is comprised between 20° and 50°, preferably between 30° and 45°.

4. The transfer machine (10) according to any one of the preceding claims, wherein each machining station (50) comprises a bottom wall (70) for collecting machining swarf that has fallen due to gravity, said bottom wall (70) being inclined towards the ground by an angle of at least 20° relative to a horizontal direction to favour the evacuation of swarf.

5. The transfer machine (10) according to any one of the preceding claims, wherein at least one machining station (50) comprises a plurality of operating units (60), each oriented in accordance with the same second triplet (X', Y', Z') of Cartesian axes.

6. The transfer machine (10) according to claim 6, wherein each of said operating units (60) of said at least one machining station (50) is configured to be moved relative to a workpiece (100) along a corresponding axis of said second triplet (X', Y', Z') of Cartesian axes.

7. The transfer machine (10) according to either of claims 5 and 6, wherein two operating units (60) are arranged in opposite positions relative to the workpiece (100) and are configured to be moved along a same axis of said second triplet (X', Y', Z') of Cartesian axes.

8. The transfer machine (10) according to any one of claims 5 to 7, wherein a first (61) and a second (62) operating unit are configured to be moved relative to a workpiece (100) along a same axis of said second triplet (X', Y', Z') of Cartesian axes, and wherein a third operating unit (63) is configured to be moved relative to said workpiece (100) along an axis perpendicular to said axis of movement of the first (61) and second (62) operating units.

9. The transfer machine (10) according to any one of the preceding claims, wherein said plurality of machining stations (50) is organised around a first axis (Y) of said first triplet (X, Y, Z) of Cartesian axes, said machining stations (50) being angularly spaced apart in a plane defined by the other two axes (X, Z) of said first triplet (X, Y, Z) of Cartesian axes.

10. The transfer machine (10) according to any one of the preceding claims, wherein said rotation angle (Θ) is defined starting from a configuration wherein the first (X, Y, Z) and the second (X', Y', Z') triplets of Cartesian axes share a same base plane in which two of their respective axes called "X" and "Z" lie and wherein the further axis called "Y" of each triplet is orthogonal to said plane, and subsequently by rotating the second triplet (X', Y', Z') about one of the axes "X" or "Z" so that the "Y" axis of the second triplet (X', Y', Z') intersects the "Y" axis of the first triplet (X, Y, Z), forming an angle other than 0° or 90°, that is, said Y axes of the respective triplets are disposed in a non-parallel and non-orthogonal manner, preferably wherein said axis "Y" of the first triplet (X, Y, Z) is substantially orthogonal to the ground.

11. The transfer machine (10) according to any one of the preceding claims, wherein each locking means (40) comprises a vice (41) for clamping a workpiece (100) and a wedge-shaped body (42) interposed and fixed between said vice (41) and a portion of the turntable (30), said wedge-shaped body (42) having a first inclined face in contact with the vice (41) and a second inclined face in contact with the portion of the turntable (30), so as to orient the vice (41) in accordance with said second triplet (X', Y', Z') of Cartesian axes rotated relative to said first triplet (X, Y, Z).

12. A method for evacuating machining swarf from a transfer machine (10), comprising the step of providing a transfer machine (10) provided with:
- a support structure (20) comprising a turntable (30) configured to rotate about an axis (Y) of a first triplet (X, Y, Z) of Cartesian axes;
- a plurality of locking means (40) arranged on said turntable (30), each of said locking means (40) being configured to hold in position a workpiece (100) oriented in accordance with a second triplet (X', Y', Z') of Cartesian machining axes;
- a plurality of machining stations (50) organised on said support structure (20) and each comprising at least one operating unit (60) provided with a tool for removing material and configured to be moved reciprocally compared to a workpiece (100) along a machining axis oriented in accordance with said second triplet (X', Y', Z') of Cartesian axes,
said method comprising the steps of:
- rotating said second triplet (X', Y', Z') of Cartesian axes by a rotation angle (θ) relative to said first triplet (X, Y, Z) of Cartesian axes;
- providing a bottom wall (70) in each machining station (60) to collect machining swarf that has fallen due to gravity; and
- installing said bottom wall (70) in a configuration inclined towards the ground by an angle of at least 20° relative to a horizontal direction to favour the evacuation of swarf.

13. The method according to claim 12, wherein said rotation angle (Θ) is other than 90°, and it is preferably comprised between 30° and 45°.

14. The method according to claim 12 or 13, wherein said rotation angle (θ) is defined starting from a configuration wherein the first (X, Y, Z) and the second (X', Y', Z') triplets of Cartesian axes share a same base plane in which two of their respective axes called "X" and "Z" lie and wherein the further axis called "Y" of each triplet is orthogonal to said plane, and subsequently by rotating the second triplet (X', Y', Z') about one of the axes "X" or "Z" so that the "Y" axis of the second triplet (X', Y', Z') intersects the "Y" axis of the first triplet (X, Y, Z), forming an angle other than 0° or 90°, that is, said Y axes of the respective triplets are disposed in a non-parallel and non-orthogonal manner, preferably wherein said axis "Y" of the first triplet (X, Y, Z) is substantially orthogonal to the ground.
